# EUROPÄISCHE PATENTSCHRIFT

(11) **EP 0 512 501 B1**
(45) Veröffentlichungstag und Bekanntmachung des Hinweises auf die Patenterteilung: **28.11.2001**
(21) Anmeldenummer: 92107632.9
(22) Anmeldetag: 06.05.1992
(51) Int. Cl.: C09K 7/06, C09K 7/02, C10M 105/20, C10M 129/24

(54) **Verwendung von Acetalen**
Use of acetals
Utilisation d'acétales

(30) Priorität: 08.05.1991 DE 4115055
(43) Veröffentlichungstag der Anmeldung: 11.11.1992
(73) Patentinhaber: Clariant GmbH, 65929 Frankfurt am Main (DE)
(72) Erfinder: Hille, Martin, Dr., W-6237 Liederbach (DE); Wittkus, Heinz, W-6000 Frankfurt am Main (DE); Windhausen, Bernd, W-6259 Brechen 1 (DE); Scholz, Hans-Jürgen, Dr., W-8755 Alzenau (DE); Weinelt, Frank, Dr., W-8269 Burgkirchen (DE)

(56) Entgegenhaltungen:
- EP-A- 0 019 999
- EP-A- 0 173 376
- DE-C- 3 936 975
- GB-A- 2 110 227
- US-A- 3 563 893
- US-A- 3 846 319
- US-A- 3 900 411
- US-A- 4 349 443
- PATENT ABSTRACTS OF JAPAN vol. 007, no. 077 (C-159)30. M{rz 1983
- DATABASE WPIL Derwent Publications Ltd., London, GB; AN 87-255335
- DATABASE WPIL Derwent Publications Ltd., London, GB; AN 82-01828J

## Beschreibung

Mineralöle sind vielfach die Basisöle oder Komponenten für Invertemulsions- und Emulsionsbohrspülungen. Ihr biologischer Abbau verläuft relativ langsam und unvollständig.

Für Invertemulsions- und Emulsionsbohrspülungen werden vorwiegend bzw. vielfach Fraktionen des Erdöls eingesetzt. Um dem Einsatzzweck zu genügen, werden sie aufbereitet und mit den geeigneten Additiven versetzt. In letzter Zeit fordert man aus ökologischen Gründen immer besser biologisch abbaubare Produkte. Dies ist besonders wichtig, wenn sich eine gewisse Kontamination der Umwelt, wie besonders beim Bohren nach Erdöl und Erdgas, nie gänzlich ausschließen läßt. Dabei verwendet man Invertemulsionsbohrspülungen (Wasser-in-Öl-Emulsionen) und Emulsionsbohrspülungen (Öl-in-Wasser-Emulsionen). Eine größere Bedeutung haben die Invertemulsionsspülungen mit dem Kohlenwasserstoff als durchgehende Phase. Bei diesem Spülungstyp werden durch Zusatz von Additiven alle Feststoffe, das vom Meißel abgebohrte Gestein, die Bohrlochwände und das Bohrgestänge von Öl benetzt Dadurch erreicht man eine sehr gute Stabilisierung der Bohrlochwände und eine Minimierung der Reibung während des Bohrens. Das Übertage abgetrennte Bohrklein ist ölbenetzt und muß gesondert entsorgt werden. "Offshore" treten ökologische Probleme auf, wenn der Bohrkleinschlamm oder Spülungsvolumina in das Meer gelangen. Der Bohrkleinschlamm sinkt dabei auf den Meeresboden, hydrophobiert dort alle Lebewesen, d.h. tötet sie in seinem Ausbreitungsgebiet. Nachteilig ist dabei besonders die schlechte biologische Abbaubarkeit und Toxizität der verwendeten Öle. Ursprünglich war Dieselöl im Einsatz. In letzter Zeit kommen immer stärker gereinigte weniger toxische Öle mit unter 0,5 % Aromaten zum Einsatz.

Als besser biologisch abbaubare Basisöle hat man Verbindungen wie Alkohole EP-A-0398112, Ester EP-A-0398113 und Ether EP-A-0391251 vorgeschlagen und getestet. In Bezug auf Toxizität und biologischer Abbaubarkeit stellen diese Produkte einen Fortschritt dar, jedoch schränken die Anforderungen an ein Basisöl in Bezug auf Stockpunkt, Viskosität, Verseifbarkeit und Geruch deren Anwendung erheblich ein. Es wurde nun überraschend gefunden, daß mit Acetalen durch die Wahl der Aldehyde und Alkohole optimale Eigenschaften der Basisöle eingestellt werden können. Dies ist besonders wichtig für den Stockpunkt und die Viskosität.

Gegenstand der Erfindung ist somit die Verwendung von Acetalen auf Basis von einwertigen Aldehyden mit 1 bis 25 C-Atomen oder auf Basis von zweiwertigen Aldehyden mit 2 bis 10 C-Atomen und einwertigen Alkoholen mit 1 bis 25 C-Atomen in Invertemulsionsbohrspülungen oder Emulsionsbohrspülungen, wobei die Kohlenwasserstoffreste keine Heteroatome enthalten, mit der Maßgabe, daß die Emulsionsbohrspülungen von 0,5 bis 50 Gew.-% Acetale enthalten.

Acetale haben als Schutzfunktion für Aldehyde eine große Bedeutung in der präparativen organischen Chemie. Man führt Aldehydgruppen mit Alkoholen in Acetale über, führt dann im neutralen und alkalischen Bereich verschiedene, auch Reaktionen unter aggresiven Bedingungen durch und spaltet das Acetal im sauren Bereich wieder in Alkohole und Aldehyd.

Die verwendeten Acetale werden durch Wasserabspaltung aus Aldehyden und Alkoholen im sauren Bereich synthetisiert. Ihre bekannte gute Beständigkeit im alkalischen Bereich erlaubt die Einstellung der optimalen Alkalität in Invertemulsionsspülungen z.B. mit Kalziumhydroxid, was gegenüber Ölen auf Esterbasis ein besonderer Vorteil ist. Die Acetale können durch eine einfache Säurebehandlung in die biologisch sehr leicht abbaubaren Komponenten überführt werden, wenn die ohnehin gute Abbaubarkeit noch gesteigert werden soll.

Für die Herstellung der verwendeten Verbindungen eignen sich Aldehyde mit 1 bis 25 C-Atomen. Sie können verzweigt oder unverzweigt, gesättigt oder ungesättigt und aliphatisch oder aromatisch sein. Vorzugsweise werden C₁- bis C₁₀-Aldehyde eingesetzt. Als Alkohole kommen einwertige mit 1 bis 25 C-Atomen, vorzugsweise mit 4 bis 20 C-Atomen, zum Einsatz. Sie können verzweigt oder unverzweigt, gesättigt oder ungesättigt und aliphatisch oder aromatisch sein. Die Acetale können aus einem Gemisch von verschiedenen oder aus kettenreinen Alkoholen und/oder Aldehyden bestehen. Die verwendeten Verbindungen können auch auf Basis zweiwertiger Aldehyde mit 2 bis 10 C-Atomen, wie Glyoxal, Weinsäuredialdehyd, Succindialdehyd, Malein- und Fumarsäuredialdehyd, vorzugsweise aber Glyoxal, mit den genannten Alkoholen hergestellt werden.

Aufgrund der guten Löslichkeit von weiteren Additiven, welche die Schmier- und sonstigen Eigenschaften verbessern in den Acetalen eignen sich die Acetale sehr gut als Basisöle, Ölkomponenten. Mineralölersatz oder Mischkomponenten für Invertemulsionsbohrspülungen und Emulsionsbohrspülungen. Ein besonderer Vorteil der Acetale ist, daß sie mit Mineralölfraktionen und Polyglykolethem teilweise mischbar sind, so daß die Acetale auch gemeinsam mit diesen Verbindungen eingesetzt werden können.

Die Acetale sind als Komponente in den Invertemulsionsbohrspülungen und Emulsionsbohrspülungen, gewöhnlich zu mindestens 0,5 Gew.-% vorhanden. Bei teilweisem bis vollständigem Ersatz der bisherigen Basisöle bzw. öligen Phase bilden sie bis zu 100 Gew.-% dieser Flüssigkeiten, mit Ausnahme der Emulsionsbohrspülungen, in denen ihr Anteil maximal 50 Gew.-% beträgt (Rest Wasser).

Die Erfindung wird anhand der nachfolgenden Beispielen näher erläutert.

Allgemeine Vorschrift zur Herstellung der in den nachfolgenden Beispielen I bis IX verwendeten Acetale:

3,5 Mol Aldehyd, 14 Mol Alkohol, 500 g n-Hexan, Methylenchlorid oder Chloroform werden gemischt, mit 1 g p-Toluolsulfonsäure als Katalysator versetzt und zum Sieden erwärmt. Das entstehende Wasser wird azeotrop abdestilliert. Nach beendeter Wasserbildung stellt man mit Na-methylat-Lösung alkalisch und destilliert anschließend das Schleppmittel und den unverbrauchten Alkohol ab. Das Acetal wird von ausgefallenem Salz filtriert und kann wahlweise destilliert werden.

### Physikalische Daten:

### Beispiele I bis IX

| Bezeichnung | | Fp. | Kp. | n_{D}²¹ | Viskosität mPas, 15°C |
|---|---|---|---|---|---|
| I | Acetaldehyddi-n-hexylacetal | <-60°C | 246°C | 1,4235 | 2,76 |
| II | Acetaldehyddi-2-ethylhexylacetal | <-60°C | 269°C | 1,4350 | 5,19 |
| III | Butyraldehyddi-n-butylacetal | <-60°C | 196°C | 1,4160 | 1,9 |
| IV | Isobutyraldehyddi-n hexylacetal | <-60°C | 251°C | 1,4270 | 3,8 |
| V | Isobutyraldehyddi-n-octylacetal | <-40°C | 230°C | 1,4351 | 7,7 |
| VI | n-Butyraldehyddi-n-octylacetal | <-60°C | 224°C | 1,4370 | 7,6 |
| VII | Isononylaldehyd-bis-C_{12/14}-acetal | -15°C | 239°C | 1,4488 | 40,6 |
| VIII | Isononylaldehyd-bis-G₁₆-acetal | -42°C | 300°C | 1,4536 | 183 (20°C) |
| IX | Glyoxaltetrabutyl-diacetal | <-70°C | 278°C | 1,4260 | 6,7 |

Die in der Zusammenstellung genannten Werte für Fp. (Stockpunkt) und Viskosität der Acetale zeigen die breite erfindungsgemäße Anwendbarkeit dieser Verbindungen.

Laborprüfung von Acetalen als Substitute von Mineralölen in Invertemulsionsspülungen

### Spülungsformulierung:

Es werden 245 ml Acetal in einem Hamilton Beach (HB) Mixer vorgelegt. Der HB-Mixer wird auf der Stellung "high speed" eingeschaltet. Portionsweise fügt man 8 g ®Tixogel (hydrophobierter Bentonit der Fa. Südchemie) hinzu, 9 g anionischen Emulgator (70 %ig, Dodecylbenzolsulfonat), 3 g kationischen Emulgator (85 %ig, Imidazolintyp) und 10 g CaO. Das Gemisch wird 5 Min. gerührt. Danach erfolgt die portionsweise Zugabe von 105 ml CaCl₂-Lösung (20 %ig).
Nach weiteren 10 Min. Rührzeit werden 275 g Bariumsulfat eingetragen, was die Dichte der Spülung auf 1,46 g/cm³ anhebt. Nochmals wird die gesamte Spülung 20 Min. gerührt. Anschließend wird die Rheologie (bei 50°C) und der Wasserverlust (25°C) der Spülung gemessen. Danach wird 18 Stunden bei 65,5°C gealtert und nochmals gemessen. Vor und nach der Alterung wird die Elektrische Stabilität (ES) in Volt mit dem Fann-Modell 23D bestimmt.

Acetale gemäß Beispiel I-VI als Basis für die Invertemulsionsspülungen 1 bis 6
- D =: Vergleichsprobe auf Basis Dieselöl
- WL =: "Water loss"
- SV =: Scheinbare Viskosität (mPa s)
- PV =: Plastische Viskosität (mPa s)
- FL =: Fließgrenze (Lb/100 sq ft)
- 10" Gel=: (Lb/100 sq ft)
- 10' Gel=: (Lb/100 sq/ft)

Die Werte für SV, PV, FL, 10" Gel und 10' Gel wurden ermittelt gemäß API Recommended Practice, Standard Procedure of Field Testing Water-Based & Drilling Fluids 13 B-1(RP 13 B-1), Section 2, die Werte für WL nach der gleichen Norm, Section 3.

### Testergebnisse: Invertemulsionsspülungen 1 bis 6

| Vor Alterung | | | | | | | |
|---|---|---|---|---|---|---|---|
| | 1 | 2 | 3 | 4 | 5 | 6 | D |
| ES (V) | 440 | 543 | 432 | 482 | 501 | 702 | 600 |
| WL cm³ | 1,4 | 0,6 | 1,8 | 1,1 | 0,7 | 0,6 | 0,9 |
| SV | 18 | 27 | 15 | 22 | 43 | 36 | 28,5 |
| PV | 16 | 24 | 13,5 | 21 | 32 | 29 | 16 |
| FL | 4 | 6 | 3 | 2 | 22 | 14 | 25 |
| 10'' Gel | 0,5 | 2,5 | 1 | 1 | 5 | 5 | 3 |
| 10' Gel | 0,5 | 2,5 | 1 | 1 | 5 | 5 | 3 |

| Nach Alterung | | | | | | | |
|---|---|---|---|---|---|---|---|
| | 1 | 2 | 3 | 4 | 5 | 6 | D |
| ES (V) | 456 | 634 | 500 | 600 | 530 | 794 | 750 |
| WL cm³ | 1,4 | 0,9 | 2,3 | 1,2 | 0,6 | 1,0 | 1,1 |
| SV | 20,5 | 31,5 | 18,5 | 27,5 | 50 | 42 | 33 |
| PV | 16 | 26 | 15 | 23 | 36 | 31 | 25 |
| FL | 9 | 11 | 7 | 9 | 28 | 22 | 16 |
| 10'' Gel | 2 | 4,5 | 2,5 | 3,5 | 14 | 10 | 6,5 |
| 10' Gel | 2 | 4,5 | 2,5 | 3,5 | 14 | 10 | 6,5 |

Die Testergebnisse zeigen im Vergleich mit der Probe auf Basis Dieselöl, daß die verwendeten Verbindungen Substitute für Mineralöle sind. Durch unterschiedliche Kombinationen von Aldehyden und Alkoholen bei den Acetalen haben diese Produkte als Mineralölsubstitut eine sehr große Flexibilität bei ihrer Anwendung. Für die verschiedenen Anwendungsgebiete lassen sich die geforderten Eigenschaften, insbesondere Stockpunkt und Viskosität, in einem sehr breiten Intervall einstellen.

Eine Invertemulsionsspülung mit geringer Dichte, z.B. unter 1,20 g/cm³, kann zur Einstellung einer höheren Viskosität der Kohlenwasserstoffphase Acetale enthalten, deren Alkylreste relativ lang sind. Muß aber mit hohen Dichten, z.B. über 2,0 g/cm³, gebohrt werden, dann empfehlen sich Acetale mit niederen Alkylresten. Damit lassen sich Viskositäten der Kohlenwasserstoffphase einstellen, welche unter denen der üblicherweise verwendbaren Mineralöle liegen und sich praktisch dem Wasser angleichen. Invertemulsionsspülungen auf Basis niedrigviskoser Acetale haben eine niedrigere Viskosität und einen geringeren Viskositätsunterschied von Übertage (ca. 20°C) und der Bohrlochsohle in großen Tiefen (z.B. 150°C) als solche auf Basis von Mineralöl. Es lassen sich praktisch optimale Invertemulsionsspülungen für bestimmte Tiefen und Formationen formulieren.

### Prüfung der Schmierwirkung von Acetalen als Mineralölersatz in Invertemulsionsspülungen

Die Prüfung erfolgt mit dem "Extreme Pressure (EP) Lubricity Tester" Part No. 212-1 der Fa. NL Baroid, NL Industries, Inc.. Damit wird das relative Schmiervermögen von Spülflüssigkeiten unter extremem Druck gemessen. Es werden die Zeiten in verschiedenen Schmiermedien bei einem gleichen Drehmoment gemessen, bei denen sich ein gegen einen Testblock rotierender Testring festfrißt. Als Vergleichsflüssigkeiten werden die Invertemulsionsspülungen 1 bis 6 und D sowie eine wasserbasische Bohrspülung mit 4 % Bentonit verwendet, deren Gewicht mit Schwerspat auf die Dichte 1,46 g/cm³ angehoben wurde. Die wasserbasische Bohrspülung enthält keinen Kohlenwasserstoff-Zusatz.

Ergebnisse der Schmierprüfungen:
- I: Mit der wasserbasischen Bohrspülung erfolgte das Festfressen bei 300 inch/lbs nach ca. 30 Sek.
- II: Die Spülungen 1 bis 6 und D zeigten vergleichbar gute Schmierwirkungen, und bei 300 inch/lbs erfolgte nach 5 Minuten noch kein Festfressen.

Invertemulsionsspülungen auf Basis der verwendeten Acetale unterscheiden sich in der Schmierwirkung signifikant von wasserbasischen Bohrspülungen. Sie sind mit Invertemulsionsspülungen auf Basis Dieselöl vergleichbar. Die Acetale sind auch in dieser Hinsicht gute Substitute für Mineralölfraktionen wie Dieselöl.

Vergleichende Prüfung der spezifischen Flächenpressung von Acetalen und anderen Ölen.

Die Prüfung erfolgt mit der Reibcerschleißwaage nach Reichardt (Fa. Sommer und Runge, Berlin). Bei dieser Prüfmethode wird die spezifische Flächenpressung gemessen.
In der folgenden Tabelle ist die spezifische Flächenpressung von Dieselöl, ® Shell-Gravex 915 (gemischtbasisches Grundöl der Fa. Shell, ca. 50 % paraffinbasisch und ca. 50 % naphthenbasisch), Isobutyraldehyddi-2-ethylhexylacetal und Acetaldehyddi-n-octylacetal aufgeführt.

### Versuchsergebnisse:

| Schmierstoff | spezifische Flächenpressung (bar) | % |
|---|---|---|
| Dieselöl | 68,2 | 100 |
| ®Shell-Gravex 915 | 76,0 | 111,4 |
| Isobutyraldehyd-di-2-ethylhexylacetal | 83,0 | 122,1 |
| Acetaldehyd-di-n-octylacetal | 110 | 161 |

Je höher die spezifische Flächenpressung, bei der die Schmierung zusammenbricht, um so besser ist die Schmierwirkung der Flüssigkeit. Die Ergebnisse zeigen, daß die verwendeten Acetale sich sehr gut als Basis oder Komponente einer Schmiermittelformulierung eignen.

### Prüfung der biologischen Abbaubarkeit:

Die Prüfung der biologischen Abbaubarkeit erfolgt im modifizierten Sturm-Test OECD 301 B, Totalabbau über CO₂-Messung. Die Prozentangaben beziehen sich auf die theoretisch mögliche CO₂-Menge. Die CO₂-Messung erfolgte über einen Zeitraum von 28 Tagen.

| Substanz | 10 mg/l | 20 mg/l | Befund |
|---|---|---|---|
| Isobutyraldehyd-di-2-Ethylhexylacetal | 71 % | 63 % | biologisch abbaubar |
| Acetaldehyd-di-n-Octylacetal | 75 % | 66 % | biologisch abbaubar |

Die Prüfung der biologischen Abbaubarkeit von Isobutyraldehyddi-butylacetal erfolgt gemäß dem modifizierten OECD-Screening-Test 301 E 12.

Die Prüfsubstanz erreicht mit durchschnittlich 95 % (bezogen auf Wirksubstanz) den geforderten Schwellenwert von 70 % DOC-Reduzierung (Totalabbau zu CO₂- und H₂O-Minimalisierung).

Die verwendeten Acetale zeichnen sich durch eine leichte biologische Abbaubarkeit aus und wirken auf Mikroorganismen weniger toxisch.

## Patentansprüche

1. Verwendung von Acetalen auf Basis von einwertigen Aldehyden mit 1 bis 25 C-Atomen oder auf Basis von zweiwertigen Aldehyden mit 2 bis 10 C-Atomen und einwertigen Alkoholen mit 1 bis 25 C-Atomen in Invertemulsionsbohrspülungen oder Emulsionsbohrspülungen, wobei die Kohlenwasserstoffreste keine Heteroatome enthalten, mit der Maßgabe, daß die Emulsionsbohrspülungen von 0,5 bis 50 Gew.-% Acetale enthalten.

2. Verwendung der Acetale gemäß Anspruch 1, wobei die einwertigen Aldehydkomponenten 1 bis 10 C-Atome und die zweiwertigen Aldehydkomponenten 2 bis 10 C-Atome enthalten.

3. Verwendung der Acetale gemäß Anspruch 1 oder 2, wobei die Alkoholkomponenten 4 bis 20 C-Atome enthalten.

4. Verwendung der Acetale gemäß den Ansprüchen 1 bis 3, wobei die Kohlenwasserstoffreste der einwertigen Aldehyde und Alkohole linear oder verzweigt, gesättigt oder ungesättigt, aliphatisch oder aromatisch sind.

5. Verwendung der Acetale gemäß einem der Ansprüche 1 bis 4, **dadurch gekennzeichnet, daß** die Acetale von 0,5 bis unter 100 Gew.-% in den Invenemulsionsbohrspülungen enthalten sind.

6. Verwendung der Acetale gemäß mindestens einem der Ansprüche 1 bis 5 als Ölkomponente, Basisöl oder Mineralölersatz.

## Claims

1. Use of acetals based on monofunctional aldehydes having 1 to 25 carbon atoms or based on difunctional aldehydes having 2 to 10 carbon atoms and monofunctional alcohols having 1 to 25 carbon atoms in invert-emulsion drilling muds or emulsion drilling muds, wherein the hydrocarbon radicals do not contain heteroatoms, with the proviso that the emulsion drilling muds contain 0.5 to 50% by weight of acetals.

2. The use of the acetals as claimed in claim 1, wherein the monofunctional aldehyde components contain 1 to 10 carbon atoms and the difunctional aldehyde components 2 to 10 carbon atoms.

3. The use of the acetals as claimed in claim 1 or 2, wherein the alcohol components contain 4 to 20 carbon atoms.

4. The use of the acetals as claimed in claims 1 to 3, wherein the hydrocarbon radicals of the monofunctional aldehydes and alcohols are linear or branched, saturated or unsaturated and aliphatic or aromatic.

5. The use of the acetals as claimed in any of claims 1 to 4, **characterized in that** the acetals are present in the invert-emulsion drilling muds in an amount of 0.5 to below 100% by weight.

6. Use of the acetals as claimed in at least one of claims 1 to 5 as an oil component, base oil or mineral oil substitute.

## Revendications

1. Utilisation d'acétals à base d'aldéhydes monovalents ayant 1 à 25 atomes de carbone ou à base d'aldéhydes bivalents ayant 2 à 10 atomes de carbone et d'alcools monovalents ayant 1 à 25 atomes de carbone dans des boues inverse émulsionnées ou des boues émulsionnées, les restes hydrocarbonés ne contenant pas d'hétéroatomes, à condition que les boues émulsionnées présentent une teneur de 0,5 à 50 % en masse d'acétals.

2. Utilisation des acétals selon la revendication 1, les composants aldéhyde monovalents présentant de 1 à 10 atomes de carbone et les composants aldéhyde bivalents présentant de 2 à 10 atomes de carbone.

3. Utilisation des acétals selon la revendication 1 ou 2, les composants alcool présentant 4 à 20 atomes de carbone.

4. Utilisation des acétals selon les revendications 1 à 3, où les restes hydrocarbonés des alcools et aldéhydes monovalents sont linéaires ou ramifiés, saturés ou insaturés, aliphatiques ou aromatiques.

5. Utilisation des acétals selon l'une des revendications 1 à 4, **caractérisés en ce que** les acétals sont contenus dans les boues inverse émulsionnées à raison de 0,5 à une valeur inférieure à 100 % en masse.

6. Utilisation des acétals selon au moins l'une des revendications 1 à 5 en tant que composants d'huile, d'huile de base ou comme substitut d'huile brute.
